# EUROPEAN PATENT APPLICATION

(11) **EP 3 168 912 A1**
(43) Date of publication of application: **17.05.2017**
(21) Application number: 15819614.7
(22) Date of filing: 10.07.2015
(51) Int. Cl.: H01M 8/04, H01M 8/12

(54) **CONTROL METHOD FOR FUEL CELL SYSTEM, FUEL CELL SYSTEM, AND POWER CONTROL DEVICE**

(30) Priority: 10.07.2014 JP 2014142748
(71) Applicant: Kyocera Corporation, Kyoto-shi, Kyoto 612-8501 (JP)
(72) Inventor: KOJIMA, Masaya, Kyoto-shi Kyoto 612-8501 (JP)
(74) Representative: Schwabe - Sandmair - Marx
(86) International application number: PCT/JP2015/003492
(87) International publication number: WO 2016/006255

(57) **Abstract**

To provide a fuel cell system that reduces electric power purchased from a system even when load changes, disclosed is a method of controlling a fuel cell system 100 including an electric generator 101 and an electric power control device 102 that controls the electric generator 101. The electric power control device 102 performs a procedure including: the monitoring step of monitoring a power consumption of a load apparatus 12 to which the fuel cell system 100 supplies electric power; the temperature acquisition step of acquiring a temperature in the electric generator 101; the gas fill amount acquisition step of acquiring an amount of gas filled in the electric generator 101; and the control step of controlling a change rate of an output voltage of the electric generator 101 based on the temperature in the electric generator 101 and the amount of gas filled in the electric generator 101 in response to an increase in the power consumption.

## Description

### CROSS-REFERENCE TO RELATED APPLICATION

The present application claims priority to and the benefit of Japanese Patent Application No. 2014-142748 (filed on July 10, 2014), the entire contents of which are incorporated herein by reference.

### TECHNICAL FIELD

The present disclosure relates to a method of controlling a fuel cell system, a fuel cell system, and an electric power control device.

### BACKGROUND

Fuel cells generate direct current electric power through chemical reaction between hydrogen, which is extracted from reformed city gas, propane gas, or the like supplied to households, and oxygen, which is contained in the air. However, when used in places, such as homes, where significant load changes occur, fuel cells have difficulty in changing the amount of gas supplied so as to follow the change rates of electric power consumptions. When loads increase, an attempt to generate electric power without sufficient supply of gas would not only cause fuel cells to fail to provide required electric power but also affect lives of fuel cells.

Patent Literature 1 proposes a fuel cell system that maintains the drop rate of output voltage of a fuel cell module to a predetermined value when the power consumption of a load is increased significantly. This is to prevent so-called concentration overvoltage, in which voltage drop occurs due to insufficient supply of gas when load is increased significantly. By thus drawing direct current electric power while maintaining the change rate of direct current output voltage to be constant, stable electric power supply is provided without a significant drop in voltage.

### CITATION LIST

### Patent Literature

PTL 1: JP2008084715A

### SUMMARY

### (Technical Problem)

However, in the process of increasing output electric power gradually while maintaining the predetermined voltage drop rate, even the fuel cell system proposed in Patent Literature 1 is not capable of supplying, from the fuel cell, the whole electric power consumption in the load. Accordingly, the shortage of electric power is compensated for by supply from a system. In this way, the fuel cell system proposed in Patent Literature 1 poses the need for purchasing electric power from the system as needed and therefore, sometimes fails to make the best of benefits of the fuel cell.

The present disclosure has been conceived in view of the above respect, and the present disclosure is to provide a fuel cell system and the like that reduces electric power purchased from the system even when load changes.

### (Solution to Problem)

One of aspects of the present disclosure resides in a method of controlling a fuel cell system including an electric generator and an electric power control device that controls the electric generator. The electric power control device performs a procedure including: the monitoring step of monitoring a power consumption of a load apparatus to which the fuel cell system supplies electric power; the temperature acquisition step of acquiring a temperature in the electric generator; the gas fill amount acquisition step of acquiring an amount of gas filled in the electric generator; and the control step of controlling a change rate of an output voltage of the electric generator based on the temperature in the electric generator and the amount of gas filled in the electric generator in response to an increase in the power consumption.

Another aspect of the present disclosure resides in a fuel cell system comprising an electric generator and an electric power control device that controls the electric generator. The electric power control device controls a change rate of an output voltage of the electric generator based on a temperature in the electric generator and an amount of gas filled in the electric generator in response to an increase in a power consumption of a load apparatus to which the fuel cell system supplies electric power.

Yet another aspect of the present disclosure resides in an electric power control device that controls an electric generator. The electric power control device controls a change rate of an output voltage of the electric generator based on a temperature in the electric generator and an amount of gas filled in the electric generator in response to an increase in a power consumption of a load apparatus to which electric power generated by the electric generator is supplied.

### (Advantageous Effect)

The present disclosure provides a fuel cell system and the like that reduces electric power purchased from the system even when load changes.

### BRIEF DESCRIPTION OF THE DRAWINGS

In the accompanying drawings:
FIG. 1 is a block diagram illustrating a fuel cell system and peripherals according to one of embodiments of the present disclosure;
FIG. 2 illustrates control flow of a fuel cell system according to one of embodiments of the present disclosure;
FIG. 3 illustrates a relation between output current and output voltage of a fuel cell module included in a fuel cell system according to one of embodiments of the present disclosure; and
FIG. 4 illustrates an example of control over output current of a fuel cell module included in a fuel cell system according to one of embodiments of the present disclosure.

### DETAILED DESCRIPTION

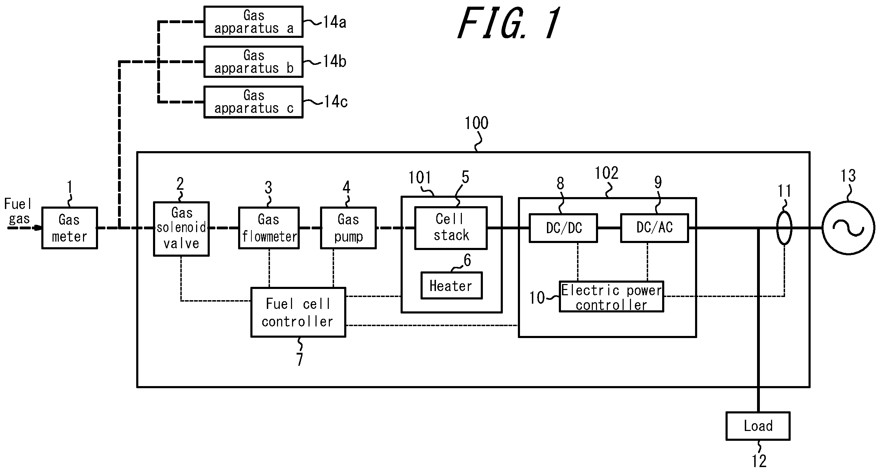

In FIG. 1, a thick solid line represents a path through which electric power flows, and a thick broken line represents a path through which fuel gas flows. Furthermore, a thin broken line represents flow of a control signal or information to be communicated. A fuel cell system 100 according to the present embodiment includes a fuel cell module (power generator) 101, a gas solenoid valve 2, a gas flowmeter 3, a gas pump 4, a fuel cell controller 7, an electric power control device 102, and a current sensor 11. FIG. 1 also illustrates a gas meter 1, a load (load apparatus) 12, a system 13, and gas apparatuses 14a to 14c, all of which are used together with the fuel cell system 100. A fuel cell module 101 in the present embodiment is a solid oxide fuel cell (SOFC). Additionally, herein, the term "system" is used to refer to a commercial power source system.

The fuel cell module 101 is a module that generates electric power in response to supply of gas fuel. The fuel cell module 101 includes, for example, a cell stack 5, which serves to generate electric power through reaction between fuel gas supplied via the gas meter 1 and air, and a heater 6, which serves to heat the cell stack 5 to maintain the cell stack 5 at a temperature suited for power generation. The cell stack 5 may be configured by laminating a plurality of power generation cells made of a highly heat-resistant material, such as ceramic. The heater 6 is an electric heater that heats the cell stack 5 in response to supply of electric power from the fuel cell module 101 or the system 13.

Additionally, although in the present embodiment the heater 6 is arranged to raise the temperature of the cell stack 5, the heater 6 may also be configured to serve also as an anti-frost heater for the fuel cell system 100.

The gas solenoid valve 2 is a valve that opens and closes a gas supply path to the fuel cell module 101 and is configured to open and close the gas supply path by using electromagnetic force. In the present embodiment, the gas solenoid valve 2 opens and closes the supply of fuel gas to a household via the gas meter 1.

The gas flowmeter 3 is a flowmeter that measures the flow rate of fuel gas, which is supplied to the fuel cell module 101 via the gas meter 1 and the gas solenoid valve 2. Information pertaining to the flow rate of gas measured every predetermined sampling time period is transmitted to the fuel cell controller 7 through communications.

The gas pump 4 adjusts the flow rate of gas supplied to the fuel cell module 101 by causing a diaphram, which is disposed inside a pump head, to swing. The fuel cell controller 7, which is described below, adjusts the flow rate of gas supplied to the fuel cell module 101 by controlling the gas pump 4 based on the information pertaining to the flow rate of gas acquired from the gas flowmeter 3.

The fuel cell controller 7 includes a controller, which executes a program, and a memory, which stores therein the program and a variety of information. Herein, the controller is configured on a single integrated circuit in which a central processing unit (CPU), an input/output circuit, a timer circuit, and the like are housed. The controller acquires information from, for example, the fuel cell module 101 and executes a program for controlling functional blocks. As represented by the broken line in FIG. 1, the fuel cell controller 7 acquires a variety of information from, for example, the gas flowmeter 3, the fuel cell module 101, and the electric power control device 102. The fuel cell controller 7 may acquire, for example, the temperature of the cell stack 5 from a temperature sensor included in the fuel cell module 101. Based on the acquired information, the fuel cell controller 7 also transmits a control signal, which is similarly represented by the broken line, to control, for example, the gas solenoid valve 2, the gas pump 4, and the fuel cell module 101. A variety of signals may be transmitted as represented by the broken line through wired or wireless communications.

The electric power control device 102 converts electric power generated by the fuel cell module 101 and supplies the converted electric power to the load 12. The electric power control device 102 includes a DC/DC converter 8, an inverter 9, and an electric power controller 10.

The DC/DC converter 8 boosts or bucks direct current electric power supplied from the fuel cell module 101 still in the form of direct current and outputs the boosted or bucked electric power to the inverter 9.

The inverter 9 converts the direct current electric power supplied from the fuel cell module 101 via the DC/DC converter 8 into 100 V or 200 V alternate current electric power and supplies the converted electric power to the load 12.

The electric power controller 10 controls the DC/DC converter 8 and the inverter 9 so that the output electric power of the fuel cell system 100 follows the power consumption of the load 12. The electric power controller 10 also communicates with the fuel cell controller 7 to acquire a variety of information pertaining to the operation state and the like of the fuel cell module 101.

The gas meter 1 is connected to a gas pipe used to supply fuel gas to a general household. After passing through the gas meter 1, fuel gas is divided into a plurality of paths to be supplied to the fuel cell system 100 and the other gas apparatuses 14a to 14c. With the above configuration, the gas meter 1 measures the total flow rate of gas consumed in all the gas apparatuses, including the fuel cell system 100, used in the household.

The gas apparatuses 14a to 14c are gas apparatuses used in the general household and may be a gas cooker, a gas stove, a gas water heater, or the like. Additionally, although in the present embodiment 3 other gas apparatuses are illustrated, any number of gas apparatuses may be connected.

The current sensor 11 detects current flowing between the fuel cell system 100 and the system 13. In Japan, it is regulated that electric power generated by the fuel cell system 100 shall not be sold. Accordingly, when the current sensor 11 detects backward flow (i.e., a current flowing in an electric power selling direction) toward the system 13, the fuel cell system 100 stops power generation. While the current sensor 11 detects forward flow, the fuel cell system 100 executes power generation under load following operation or rated operation by determining that electric power may be supplied from the fuel cell system 100 itself to the load 12.

The load 12 is a load that operates at 100 V or 200 V single-phase alternate current used in households. Examples of the load 12 may include an electric apparatus, such as a refrigerator, an emergency light, a hot water supply system, or a home network server, that are to avoid power failure as much as possible, and a general load for home use, such as a hair dryer, a home game machine, or an audio system for appreciation of music. The load 12 may be composed of any number of such electric apparatuses.

Additionally, although in the present embodiment 100 V or 200 V single-phase alternate current is outputted to the load 12, the present disclosure is not limited to the present embodiment. Since three-phase three-wire 200 V is often used to actuate refrigerators and air conditioners for business use or motors used in factories, an inverter used for conversion into three-phase 200 V may also be disposed instead of the inverter 9.

Furthermore, although in the present embodiment the description is given under the assumption that the load 12 to be connected is composed of electric apparatuses that may be used in Japan, changes may be made as appropriate in consideration of the use of electric apparatuses that may be used inside and outside of Japan. For instance, instead of the inverter 9, an inverter that may output 220 to 240 V alternate current may be disposed, and the inverter may be configured to be connected with electric apparatuses that may be used in Asia, Oceania, and Europe regions.

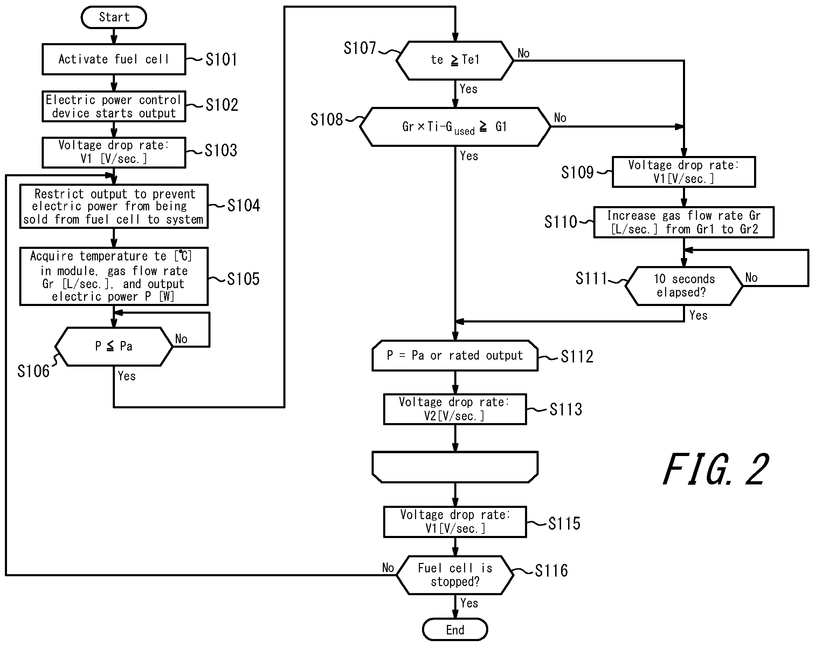

In FIG. 2, the fuel cell controller 7 firstly turns the heater 6 on and acquires information pertaining to the temperature of the cell stack 5 from the fuel cell module 101 periodically. Then, when the temperature of the cell stack 5 reaches a temperature (such as approximately 700 °C) suited for power generation of the solid oxide fuel cell, the fuel cell controller 7 opens the gas solenoid valve 2 to start supply of fuel gas to the fuel cell module 101. This activates the fuel cell module 101 to start power generation (Step S101).

When the fuel cell module 101 starts the power generation, the electric power control device 102 controls the DC/DC converter 8 and the inverter 9 to start operating and controls the output voltage of the inverter 9 to be 100 V or 200 V alternate current. When the output of the inverter 9 reaches a predetermined voltage, the fuel cell controller 7 controls the fuel cell system 100 to start to supply electric power to the load 12 (Step S102).

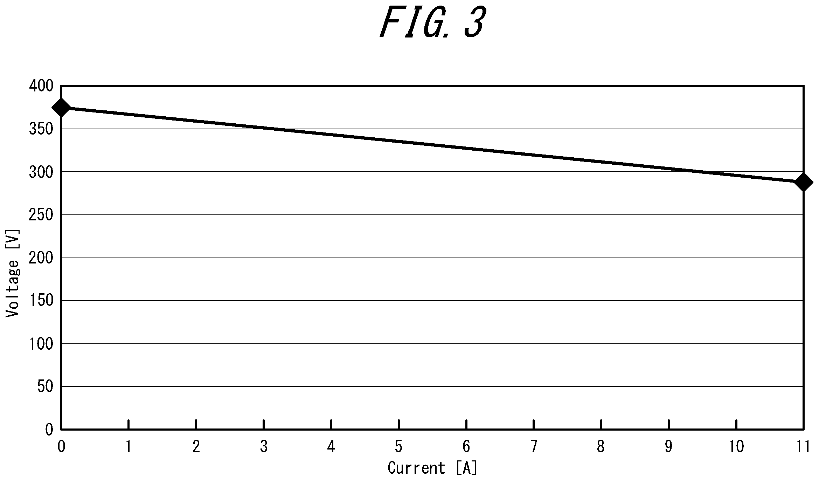

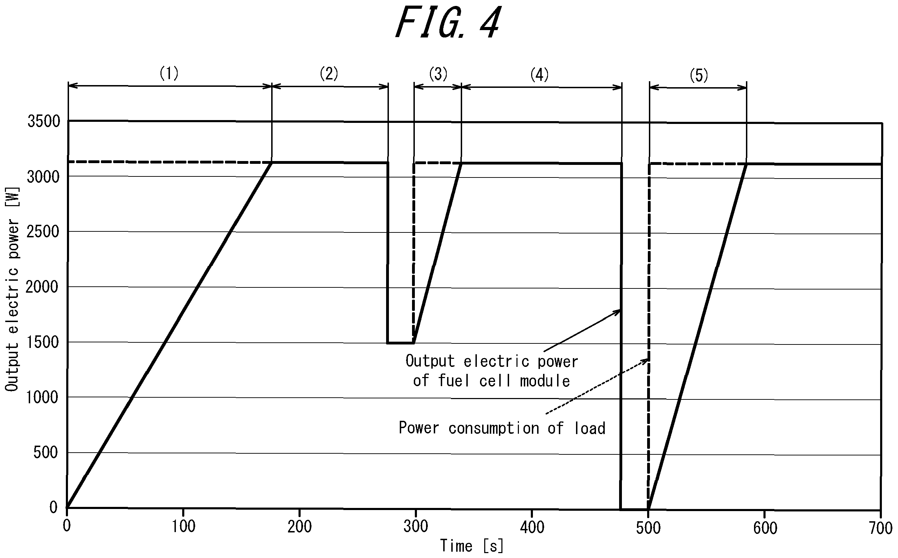

After electric power is started to be supplied to the load 12 in Step S102, the electric power control device 102 monitors the output voltage of the fuel cell module 101 and gradually increases the electric power supplied to the load 12 so that the drop rate of the output voltage equals a predetermined value: V1 [V/sec. (Step S103). This is to restrict the voltage drop rate in consideration of the fact that operation of the fuel cell might be stable at the time of activating the system. Herein, supposing, for example, that the cell stack 5 is composed of 376 cells connected in series, 0.5 [V/sec.] may be adopted as the value of V1. FIG. 3 illustrates a relation between output current and output voltage of the fuel cell module 101. As can be seen, in the fuel cell module 101, as current is increased to increase output electric power, output voltage is decreased gradually. The electric power control device 102 gradually increases the output electric power of the electric power control device 102 so that the output voltage is decreased at the predetermined voltage drop rate V1. At this time, the output electric power of the fuel cell module 101 is changed as illustrated in, for example, a section (1) in FIG. 4. The output is changed by 18 [W/sec.] in the section (1). Additionally, a broken line represents the power consumption of the load 12 in the section (1), and any electric power that cannot be covered by output from the fuel cell module 101 is compensated for by supply of electric power supply from the system 13.

When the output electric power of the electric power control device 102 reaches close to the power consumption of the load 12, the fuel cell system 100 is switched to load following operation. The load following operation refers to the state, as illustrated, for example, in a section (2) in FIG. 4, where electric power to be generated is controlled so that the amount of electric power outputted is substantially equal to the power consumption of the load 12. In the load following operation, the electric power control device 102 constantly monitors the current detected by the current sensor 11 and controls the output electric power of the fuel cell system 100 to create a slight flow of current through the current sensor 11 in the forward flow direction. The electric power control device 102 also restricts the output electric power of the fuel cell system 100 to prevent the backward flow from the fuel cell system 100 to the system 13 (Step S104). Accordingly, during the load following operation, the output electric power of the fuel cell system 100 is a value slightly smaller than the power consumption of the load 12.

Furthermore, the electric power control device 102 communicates with the fuel cell controller 7 to acquire information pertaining to the temperature te [°C] in the fuel cell module 101, the flow rate Gr [L/sec.] of gas supplied, and output electric power P [W] (Step S105).

The electric power control device 102 determines whether the output electric power P of the fuel cell system 100 is less than or equal to a target output electric power value Pa (Step S106). Herein, the target output electric power value Pa is determined in accordance with the power consumption in the load. When determining that P ≤ Pa, the electric power control device 102 subsequently determines whether the temperature te [°C] in the fuel cell module 101 is greater than or equal to a temperature threshold Tel [°C] in the fuel cell module 101 (Step S107). Herein, the temperature threshold Tel [°C] in the fuel cell module 101 is an indication of a temperature required for efficient operation of the fuel cell. In the present embodiment, for example, 700 [°C] may be selected as a temperature suited as Te1.

Subsequently, the electric power control device 102 determines whether the amount of fuel filled in the fuel cell module 101 is greater than or equal to a predetermined level G1 [L] (Step S108). The reason is that increasing generated electric power significantly (i.e., increasing the drop rate of output voltage significantly) while the amount of fuel filled in the fuel cell module 101 is not yet sufficient will cause the problem of concentration overvoltage. Concentration overvoltage refers to a phenomenon where voltage drops because electrode reaction is hindered due to slow supply and removal of a reaction material and a reaction product to and from an electrode.

Additionally, the amount of fuel filled may be calculated as a value obtained by deducting, from a value obtained by multiplying the flow rate Gr [L/sec.] flowing into the fuel cell module 101 by a measurement time period Ti [sec.], the amount of fuel used G_{used} in the fuel cell module 101 within the time period Ti [sec.]. Additionally, as the measurement time period Ti, a time period from 10 seconds before detection of an increase in the power consumption to the detection may be used, for example. Furthermore, the amount of fuel used G_{used} may be calculated from the electric power generated by the fuel cell module 101 within the time period Ti [sec.], for example.

When determining that the amount of fuel filled in the fuel cell module 101 is greater than or equal to the predetermined level in Step S108, the electric power control device 102 increases electric power supplied to the load 12 so that the drop rate of the output voltage of the fuel cell module 101 equals V2 [V/sec.] (Step S113). Herein, V2 is a value greater than V1, and for example, V2 = 1.0 [V/sec.]. When the voltage drop rate is V2, the output electric power of the fuel cell module 101 is changed as illustrated, for example, in sections (3) and (5) in FIG. 4. Although there is still the need for purchasing electric power from the system 13, it only takes half time to start load following operation. Consequently, electric power purchased from the system 13 may be reduced to approximately half.

The electric power control device 102 continues the operation until the output electric power P of the fuel cell module 101 equals the target output electric power value Pa or until the output electric power P reaches a rated output while maintaining the voltage drop rate to V2 (Step S 112). Then, when the output electric power P equals the target output electric power value Pa or when the output electric power P reaches the rated output, the electric power control device 102 sets the voltage drop rate to V1 (Step S115), and unless the fuel cell is stopped (Step S 116), the processing returns to Step S104 to continue the control. On the other hand, when the fuel cell is stopped in Step S116, the present control flow ends.

When determining that the temperature te [°C] in the fuel cell module 101 is less than the temperature threshold Tel [°C] in the fuel cell module 101 in Step 107, the electric power control device 102 maintains the voltage drop rate to V1 (Step S109). Similarly, when determining that the amount of fuel filled in the fuel cell module 101 is less than the predetermined level G1 [L] in Step S108, the electric power control device 102 maintains the voltage drop rate to V1 (Step S109). Then, the gas flow rate Gr [L/sec.] is increased from Gr1 to Gr2 (Step S110), and after a lapse of, for example, 10 seconds (Step S111), the voltage drop rate is set to V2 (Step S113). The subsequent processing is the same as the control flow described earlier.

The control flow from Step S109 through Step S111 is to perform processing for preventing the problem of concentration overvoltage by increasing the flow rate of gas into the fuel cell module 101 and letting a predetermined time period (10 seconds in the above embodiment) pass even when the temperature in the fuel cell module 101 does not reach the predetermined temperature. With this processing, the amount of gas filled in the fuel cell module 101 becomes greater than or equal to the predetermined amount, and the temperature in the fuel cell module 101 is expected to increase by a certain degree, and therefore, concentration overvoltage is prevented.

Additionally, in the example of controlling output electric power illustrated in FIG. 4, load following operation is described to be performed in the sections (2) and (4) after the output electric power P of the fuel cell module 101 equals the target output electric power value Pa. However, the present embodiment is not limited to the above form. In another form of the embodiment, operation may be performed in the sections (2) and (4) so that the fuel cell module 101 provides a rated output, and surplus electric power not consumed in the load may be charged in a storage battery or the like. Generally, it is more effective for a fuel cell to perform rated operation, in which the fuel cell continues to provide a constant rated output, than to perform load following operation, in which the output of the fuel cell is changed to follow the load. Accordingly, by the fuel cell module 101 being configured to perform rated operation, efficiency of the fuel cell system 100 as a whole is further improved.

As has been described, according to the present embodiment, when the fuel cell system 100 is operated to follow load, the drop rate of output voltage is increased under the conditions that the temperature in the fuel cell module 101 and the amount of gas filled in the fuel cell module 101 are greater than or equal to the predetermined levels. With the above configuration, even when the power consumption of the load 12 is increased, the problem of concentration overvoltage is prevented, and a time period required for following load is reduced. Thus, usage efficiency of the fuel cell is improved, and electric power purchased from the system 13 is reduced.

Furthermore, according to the present embodiment, the amount of gas filled in the fuel cell module 101 is calculated from the flow rate of gas flowing into the fuel cell module 101 and the amount of gas used in the fuel cell module 101. With the above configuration, the amount of gas filled in the fuel cell module 101 is grasped correctly, and therefore, usage efficiency is improved without affecting the life of the fuel cell.

Moreover, according to the present embodiment, when the fuel cell system 100 is operated to follow load, even when the temperature in the fuel cell module 101 does not reach the predetermined temperature, the flow rate of gas is increased for the predetermined time period before increasing the drop rate of output voltage. The above configuration reduces the time period required for following load while preventing the problem of concentration overvoltage even when the power consumption of the load 12 is increased. Thus, usage efficiency of the fuel cell is improved, and electric power purchased from the system 13 is reduced.

Although the present disclosure has been described based on the drawings and the embodiment thereof, it is to be noted that a person skilled in the art may easily make various changes and modifications according to the present disclosure. Therefore, such changes and modifications are to be understood as included within the scope of the present disclosure. For example, functions and the like included in various components, steps, or the like may be rearranged in any logically consistent way. Furthermore, components, steps, or the like may be combined into one or may be divided.

Many of aspects of the present disclosure are indicated as a series of operations executed either by a computer system that may execute program instructions and by other hardware. Examples of a computer system and other hardware may include a versatile computer, a personal computer (PC), a dedicated computer, a workstation, a personal communications system (PCS), an electronic notepad, a laptop computer, and other programmable data processing devices. Note that, in one of embodiments, a variety of operations are executed by a dedicated circuit (for example, individual logical gates interconnected in order to execute a particular function) implemented by program instructions (software), or by a logical block, program module, or the like executed by one or more processors. The one or more processors that execute a logical block, program module, or the like include, for example, one or more of a microprocessor, central processing unit (CPU), application specific integrated circuit (ASIC), digital signal processor (DSP), programmable logic device (PLD), field programmable gate array (FPGA), processor, controller, microcontroller, microprocessor, electronic device, other devices designed to be capable of executing the functions disclosed herein, and/or a combination of any of the above. The embodiment disclosed herein is implemented, for example, by hardware, software, firmware, middleware, microcode, or a combination of any of these.

The machine-readable, non-transitory storage medium used herein may also be configured by a computer-readable tangible carrier (medium) in the categories of solid-state memory, magnetic disks, and optical discs. Data structures and an appropriate set of computer instructions, such as program modules, for causing a processor to execute the techniques disclosed herein are stored on these media. Examples of computer-readable media may include an electrical connection with one or more wires, a magnetic disk storage medium, and other magnetic or optical storage media (such as a compact disc (CD), laser disc^{®}, digital versatile disc (DVD^{®}), Blu-ray disc^{®} [laser disc, DVD, and blu-ray disc are each a registered trademark in Japan, other countries, or both]), portable computer disk, random access memory (RAM), read-only memory (ROM), rewritable programmable ROM such as EPROM, EEPROM, or flash memory, another tangible storage medium that may store information, or a combination of any of these. The memory may be provided internal and/or external to a processor/processing unit. As used in the present disclosure, the term "memory" refers to any type of long-term storage, short-term storage, volatile, non-volatile, or other memories. No limitation is placed on the particular type or number of memories, or on the type of medium for memory storage.

While the disclosed system has a variety of modules and/or units for implementing particular functions, these modules and units have only been indicated schematically in order to briefly illustrate the functionality thereof. It is to be noted that no particular hardware and/or software is necessarily indicated. In this way, the various aspects disclosed herein may be embodied in a variety of forms, and all such embodiments are included in the scope of the present disclosure.

### REFERENCE SIGNS LIST

- 1: Gas meter
- 2: Gas solenoid valve
- 3: Gas flowmeter
- 4: Gas pump
- 5: Cell stack
- 6: Heater
- 7: Fuel cell controller
- 8: DC/DC converter
- 9: Inverter
- 10: Electric power controller
- 11: Current sensor
- 12: Load (load apparatus)
- 13: System
- 14a,14b,14c: Gas apparatus
- 100: Fuel cell system
- 101: Fuel cell module (electric generator)
- 102: Electric power control device

## Claims

1. A method of controlling a fuel cell system including an electric generator and an electric power control device that controls the electric generator, wherein the electric power control device performs a procedure comprising:
the monitoring step of monitoring a power consumption of a load apparatus to which the fuel cell system supplies electric power;
the temperature acquisition step of acquiring a temperature in the electric generator;
the gas fill amount acquisition step of acquiring an amount of gas filled in the electric generator; and
the control step of controlling a change rate of an output voltage of the electric generator based on the temperature in the electric generator and the amount of gas filled in the electric generator in response to an increase in the power consumption.

2. The method according to claim 1, wherein the change rate of the output voltage is controlled by changing an output electric power of the fuel cell system.

3. The method according to claim 1 or 2, wherein, when the temperature in the electric generator is greater than or equal to a predetermined temperature and the amount of gas filled in the electric generator is greater than or equal to a predetermined fill amount, the control step performs the control to increase a drop rate of the output voltage.

4. The method according to any one of claims 1 to 3, wherein the gas fill amount acquisition step acquires the amount of gas filled in the electric generator by calculating the amount of gas filled in the electric generator based on a flow rate of gas flowing into the electric generator and an amount of gas used in the electric generator within a first predetermined time period before the increase in the power consumption.

5. The method according to claim 1 or 2, wherein, when the temperature in the electric generator is less than a predetermined temperature, the control step performs the control to increase a flow rate of gas by a predetermined flow rate for a second predetermined time period after the increase in the power consumption and subsequently to increase a drop rate of the output voltage.

6. The method according to claim 3 or 5, wherein the control to increase the drop rate of the output voltage is continued until an output electric power of the fuel cell system reaches a target output electric power value or a rated output electric power.

7. The method according to claim 4, wherein the amount of gas used in the electric generator is calculated from an output electric power of the fuel cell system.

8. A fuel cell system comprising:
an electric generator; and
an electric power control device that controls the electric generator, wherein
the electric power control device controls a change rate of an output voltage of the electric generator based on a temperature in the electric generator and an amount of gas filled in the electric generator in response to an increase in a power consumption of a load apparatus to which the fuel cell system supplies electric power.

9. An electric power control device that controls an electric generator, wherein the electric power control device controls a change rate of an output voltage of the electric generator based on a temperature in the electric generator and an amount of gas filled in the electric generator in response to an increase in a power consumption of a load apparatus to which electric power generated by the electric generator is supplied.

10. The electric power control device according to claim 9, wherein the change rate of the output voltage is controlled by changing an output electric power of the electric power control device.

11. The electric power control device according to claim 9 or 10, wherein, when the temperature in the electric generator is greater than or equal to a predetermined temperature and the amount of gas filled in the electric generator is greater than or equal to a predetermined fill amount, the electric power control device performs the control to increase a drop rate of the output voltage.

12. The electric power control device according to any one of claims 9 to 11, wherein the amount of gas filled in the electric generator is calculated based on a flow rate of gas flowing into the electric generator and an amount of gas used in the electric generator within a first predetermined time period before the increase in the power consumption.

13. The electric power control device according to claim 9 or 10, wherein, when the temperature in the electric generator is less than a predetermined temperature, the electric power control device performs the control to increase a flow rate of gas by a predetermined flow rate for a second predetermined time period after the increase in the power consumption and subsequently to increase a drop rate of the output voltage.

14. The electric power control device according to claim 11 or 13, wherein the control to increase the drop rate of the output voltage is continued until an output electric power reaches a target output electric power value or a rated output electric power.

15. The electric power control device according to claim 12, wherein the amount of gas used in the electric generator is calculated from an output electric power.
